# EUROPEAN PATENT APPLICATION

(11) **EP 1 594 336 A2**
(43) Date of publication of application: **09.11.2005**
(21) Application number: 05010074.2
(22) Date of filing: 09.05.2005
(51) Int. Cl.: H04Q 7/38

(54) **System and method for handover capable of minimizing service delay in broadband wireless access communication system**

(30) Priority: 07.05.2004 KR 2004032413
(71) Applicant: SAMSUNG ELECTRONICS CO., LTD., Suwon-si, Gyeonggi-do (KR)
(72) Inventor: Lee, Sung-Jin, Yeongtong-gu, Suwon-si, Gyeonggi-do (KR); Koo, Chang-Hoi, Yeongtong-gu, Suwon-si, Gyeonggi-do (KR); Son, Jung-Je, Yeongtong-gu, Suwon-si, Gyeonggi-do (KR); Lim, Hyoung-Kyu, Yeongtong-gu, Suwon-si, Gyeonggi-do (KR); Kang, Hyun-Jeong, Yeongtong-gu, Suwon-si, Gyeonggi-do (KR); Kim, So-Hyun, Yeongtong-gu, Suwon-si, Gyeonggi-do (KR); Son, Yeong-Moon, Yeongtong-gu, Suwon-si, Gyeonggi-do (KR)
(74) Representative: Grünecker, Kinkeldey, Stockmair & Schwanhäusser Anwaltssozietät

(57) **Abstract**

Disclosed is a method and a system for performing a handover capable of minimizing a service delay in a broadband wireless access communication system including a mobile station (MS), a serving base station (BS) providing services to the MS, and a target BS to which the MS hands over. The method comprises the steps of detecting that the handover from the serving BS to the target BS is necessary; and transmitting a request to the serving BS in order to perform portions of a handover process prior to the handover to the target BS.

## Description

### BACKGROUND OF THE INVENTION

### 1. Field of the Invention

The present invention relates to a system and a method for performing a handover in a broadband wireless access (BWA) communication system. More particularly, the present invention relates to a system and a method for performing a handover capable of minimizing a service delay by performing an association during a scanning interval in a BWA communication system.

### 2. Description of the Related Art

Recently, extensive research has been conducted related to the for 4^{th} generation (4G) communication systems to provide subscribers with services having superior quality of service (QoS) at a higher transmission rates. In particular, extensive studies are being conducted in relation to the 4G communication systems in order to provide subscribers with high-speed services by ensuring the mobility of a terminal, and a QoS to broadband wireless access communication systems, such as wireless local area network (LAN) communication systems and wireless metropolitan area network (MAN) communication systems. For instance, systems based on the Institute of Electrical and Electronics Engineers (IEEE) 802.16a communication standard and the IEEE 802.16e standard are such broadband wireless access communication systems.

To support a broadband transmission network for a physical channel of the wireless MAN communication system, the IEEE 802.16a communication system and the IEEE 802.16e communication system employ an orthogonal frequency division multiplexing (OFDM) scheme and an orthogonal frequency division multiple access (OFDMA) scheme. The IEEE 802.16a communication system is based on a single cell structure and does not take into account the mobility of a subscriber station (SS). In contrast, the IEEE 802.16e communication system takes the mobility of the SS into account in addition to the IEEE 802.16a communication system. The SS having the mobility is called a "mobile station (MS)".

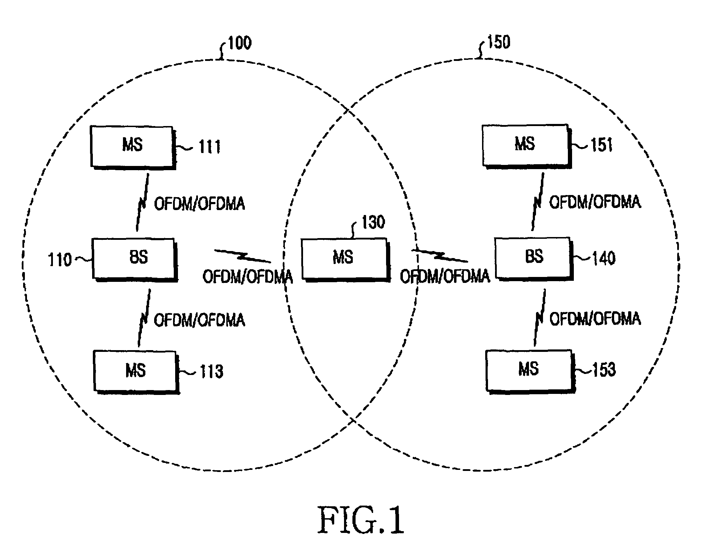

A structure of a conventional IEEE 802.16e communication system will be described with reference to FIG. 1.

FIG 1 is a diagram illustrating the structure of the conventional IEEE 802.16e communication system.

Referring to FIG 1, the conventional IEEE 802.16e communication system has a multi-cell structure including a cell 100 and a cell 150. The conventional IEEE 802.16e communication system includes a base station (BS) 110 for managing the cell 100, a BS 140 for managing the cell 150, and a plurality of MSs 111, 113, 130, 151 and 153. The BSs 110 and 140 communicate with the MSs 111, 113, 130, 151 and 153 through the OFDM/OFDMA schemes. Among the MSs 111, 113, 130, 151 and 153, the MS 130 exists in a boundary area, that is, a handover area located between the cells 100 and 150. If the MS 130 moves towards the cell 150 managed by the BS 140 while communicate with the BS 110, a serving BS thereof may change from the BS 110 to the BS 140.

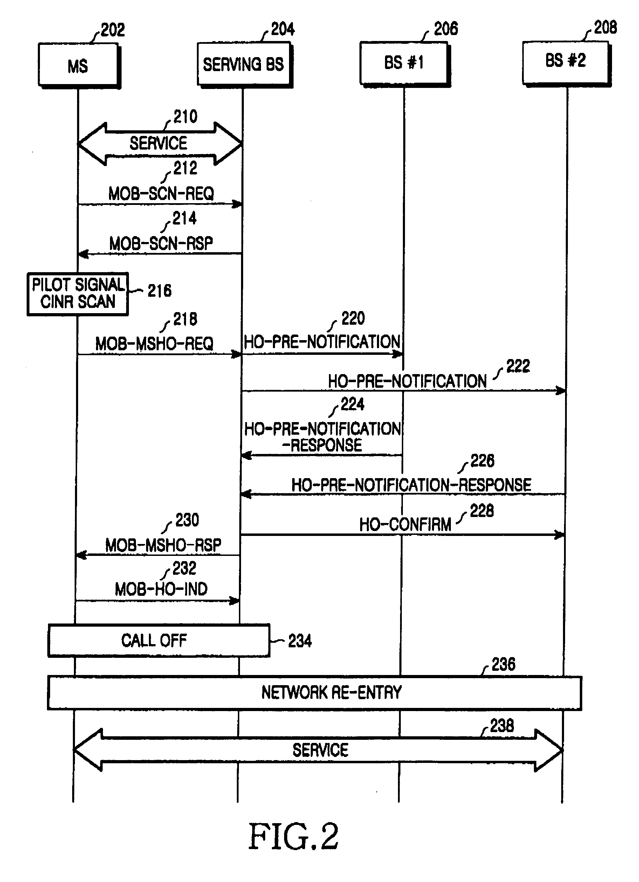

A handover process in the conventional IEEE 802.16e communication system will be described with reference to FIG 2.

FIG. 2 is a signal flowchart illustrating the handover process of the conventional IEEE 802.16e communication system.

Referring to FIG. 2, an MS 202 receives services by establishing a call through a serving BS 204 (step 210). Although it is not illustrated in FIG 2, the MS 202 receives a neighbor advertisement (MOB-NBR-ADV) message from the serving BS 204, thereby obtaining information related to the neighbor BSs. When the MS 202 scans for reference signals transmitted thereto from the neighbor BSs, such as carrier to interference and noise ratios (CINRs) of pilot signals, the MS 202 transmits a scanning interval allocation request (MOB-SCN-REQ) message to the serving BS 204 (step 212).

Upon receiving the MOB-SCN-REQ message from the MS 202, the serving BS transmits a mobile scanning interval allocation response (MOB-SCN-RSP) message to the MS 202 (step 214). The expression "measurement for CINR of the pilot signal" will be described as "scan or scanning for CINR of the pilot signal" for the purpose of convenience.

The MS 202 receiving the MOB-SCN-RSP message scans CINRs of the pilot signals transmitted thereto from the neighbor BSs and the serving BS 204 (step 216). If the MS 202 determines that the present serving BS 204 for the MS 202 must be changed, the MS 202 transmits a mobile station handover request (MOB-MSHO-REQ) message to the serving BS 204 (step 218). The MOB-MSHO-REQ message includes information related to a target BS or a plurality of target BSs for processing the handover, wherein the MS 202 determines the target BS or target BSs by scanning the CINRs of the pilot signals transmitted thereto from the neighbor BSs and the serving BS 204. In FIG 2, it is assumed that the MS 202 selects two target BSs including a first target BS 206 and a second target BS 208.

Upon receiving the MOB-MSHO-REQ message, the serving BS 204 transmits a handover notification (HO-PRE-NOTIFICATION) message to the first and second BSs 206 and 208, respectively (steps 220 and 222). The HO-PRE-NOTIFICATION message may include required bandwidth information transmitted to the MS 202 from the target BS (a new serving BS) upon requested by the MS 202 and QoS information required for the MS 202. Then, the first and second target BSs 206 and 208 transmit a handover notification response (HO-PRE-NOTIFICATION-RESPONSE) message to the serving BS 204 in response to the HO-PRE-NOTIFICATION message by taking resource states thereof into consideration (steps 224 and 226). In FIG. 2, it is assumed that the second target BS 208 transmits the HO-PRE-NOTIFICATION-RESPONSE message that includes the acceptance of the handover request of the MS 202 to the serving BS 204. The serving BS 204 transmits a handover confirm (HO-CONFIRM) message to the second target BS 208 in order to notify the BS 208 of the handover of the MS 202 (step 228). In addition, the serving BS 204 transmits a mobile station handover response (MOB-MSHO-RSP) message to the MS 202 in response to the MOB-MSHO-REQ message (step 230).

Upon receiving the MOB-MSHO-RSP message from the serving BS 204, the MS 202 transmits to the serving BS 204 a handover indication (MOB-HO-IND) message, which indicates that the MS 202 will be handed-over to the second target BS 208 (step 232), and releases the call with respect to the serving BS 204 (step 234). Then, the MS 202 performs a network re-entry procedure with respect to the second target BS 208, which is the newly selected serving BS (step 236). The network re-entry procedure includes ranging, re-authentication and re-registration steps. After the network re-entry procedure has been completed, the MS 202 establishes the call with respect to the second target BS 208, thereby receiving the service (step 238).

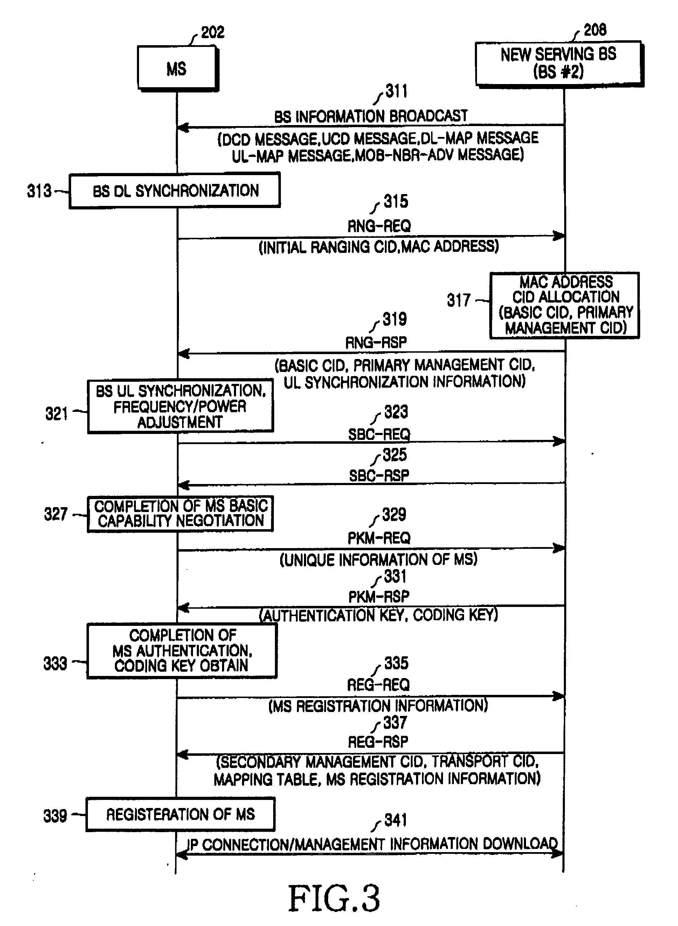

The network re-entry procedure shown in step 236 of FIG. 2 will be described in detail with reference to FIG 3.

FIG 3 is a signal flowchart illustrating the network re-entry procedure shown in FIG 2.

Referring to FIG 3, the MS 202 receives BS information of the second target BS 208 (hereinafter, referred to as a new serving BS) from the second target BS 208 through a downlink map (DL-MAP) message, an uplink map (UP-MAP) message, a downlink channel descriptor (DCD) message, an uplink channel descriptor (UCD) message and a MOB-NBR-ADV message (step 311) and obtains downlink synchronization based on the above BS information (step 313). After that, the MS 202 transmits a ranging request (RNG-REQ) message to the new serving BS 208. The RNG-REQ message includes an initial ranging connection ID (CID) and a medium access control (MAC) address of the MS 202.

The new serving BS 208 receives the RNG-REQ message from the MS 202 and allocates a basic CID and a primary management CID to the MS 202 by mapping with the MAC address included in the RNG-REQ message (step 317). At this time, the new serving BS 208 determines if the MAC address of the MS 202 is registered in MAC address lists of the MSs 202 of the new serving BS 208. If the MAC address of the MS 202 is registered in the MAC address lists of the MSs 202 of the new serving BS 208, the new serving BS 208 determines that the MS 202 re-accesses the new serving BS 208 because the MS 202 loses synchronization with respect to the BS after it obtains the synchronization, so the new serving BS 208 re-allocates the basic CID and the primary management CID to the MS 202 when the MS 202 re-accesses the new serving BS 208. If the MAC address of the MS 202 is not registered in the MAC address lists of the MSs 202 of the new serving BS 208, the new serving BS 208 determines that the MS 202 accesses the serving BS 209 for the first time, so the new serving BS 208 allocates the basic CID and the primary management CID to the MS 202 by mapping with the MAC address of the MS 202. The new serving BS 208 may perform step 317 when the new serving BS 208 receives the RNG-REQ message due to the handover operation.

After that, the new serving BS 208 transmits a ranging-response (RNG-RSP) message to the MS 202 in response to the RNG-REQ message of the MS 202 (step 319). The RNG-RSP message includes the basic CID, the primary management CID and uplink synchronization information. Upon receiving the RNG-RSP message from the new serving BS 208, the MS 202 obtains BS uplink synchronization and adjusts frequency and power (step 321).

The MS 202 then transmits an MS basic capability negotiation request (SBC-REQ) message to the new serving BS 208 (step 323). The SBC-REQ message is an MAC message transmitted to the new serving BS 208 from the MS 202 for the purpose of basic capability negotiation and includes information related to the modulation and coding schemes of the MS 202. Upon receiving the SBC-REQ message from the MS 202, the new serving BS 208 checks the modulation and coding schemes of the MS 202 and transmits an MS basic capability negotiation response (SBC-RSP) message to the MS 202 in response to the SBC-REQ message (step 325).

The basic capability negotiation of the MS 202 has been completed as the SBC-RSP message is received in the MS 202 (step 327), so the MS 202 transmits a privacy key management request (PKM-REQ) message to the new serving BS 208 (step 329). The PKM-REQ message is an MAC message used for MS authentication and includes certificate information of the MS 202. Upon receiving the PKM-REQ message from the MS 202, the new serving BS 208 submits an authentication request to an authentication server (AS) based on the certificate information of the MS 202 included in the PKM-REQ message. At this time, if the MS 202 is an authenticated MS, the new serving BS 208 transmits a privacy key management response (PKM-RSP) message to the MS 202 in response to the PKM-REQ message (step 326). The PKM-RSP message includes an authentication key allocated to the MS 202 and a traffic encryption key.

As the PKM-RSP message is received in the MS 202, the authentication of the MS 202 has been completed, so that the MS 202 obtains the TEK (step 333) and transmits a registration request (REG-REQ) message to the new serving BS 208 (step 335). The REG-REQ message includes registration information of the MS 202. Upon receiving the REG-REQ message, the new serving BS 208 registers the MS 202 in the new serving BS 208 by detecting the registration information of the MS 202 and allocates a secondary management CID to the MS 202. Then, the new serving BS 208 transmits a registration response (REG-RSP) message to the MS 202 in response to the REG-REQ message (step 337). The REG-RSP message includes the secondary management CID and the registration information of the MS 202.

As the REG-RSP message is received in the MS 202, the registration of the MS 202 has been completed and the MS 202 obtains the secondary management CID (step 339). The MS 202 has three CIDs that include the basic CID, the primary management CID and the secondary management CID when the registration has been completed. After the MS 202 has been registered in the new serving BS 208, an Internet protocol (IP) is established between the MS 202 and the new serving BS 208 so that management information can be downloaded through the IP (step 341). After that, although it is not illustrated, a service flow is established between the MS 202 and the new serving BS 208. The service flow signifies a flow allowing an MAC-service data unit (SDU) to be communicated through a connection having a predetermined QoS. As described above, a transport CID must be allocated when transmitting/receiving the MAC-SDU (that is, traffic), the transport CID is allocated to the MS 202 when the service flow is established. As the service flow is established, the service communication may be realized between the MS 202 and the new serving BS 208.

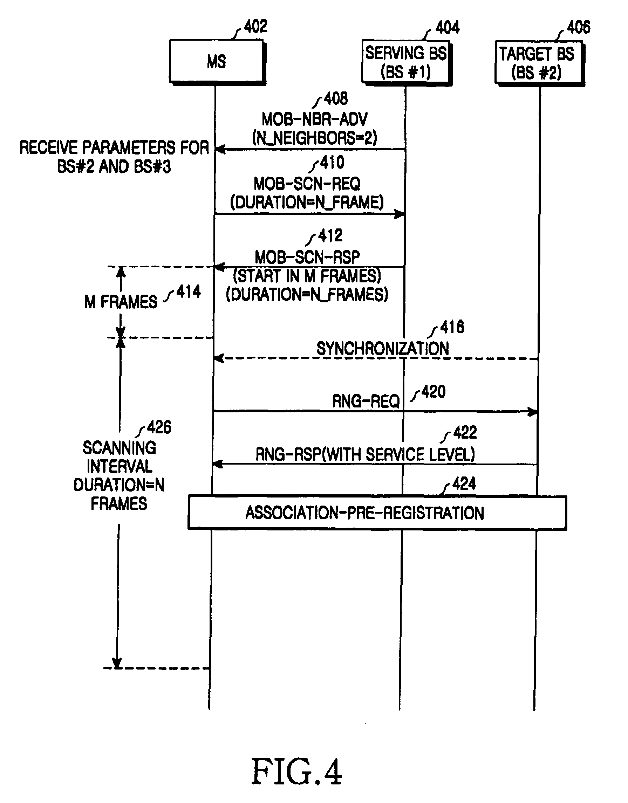

An association procedure for allowing the MS to rapidly access the new serving BS during the handover will be described with reference to FIG. 4.

FIG 4 is a signal flowchart illustrating the association procedure of the conventional IEEE 802.16e communication system.

Prior to explaining FIG. 4, the description will be made in relation to term "association".

As described above with reference to FIG. 3, when the MS performs a handover, the MS transmits/receives a plurality of message to/from the new serving BS. In addition, data is communicated between the MS and the new serving BS after the handover of the MS has been completed. If it is necessary for the MS to receive the service from the new serving BS while moving its position instead of receiving a new service from the new serving BS, the service being provided to the MS may be interrupted by the messages transmitted/received between the MS and the new serving BS. Accordingly, as described above with reference to FIG. 2, the MS not only scans the CINRs of the pilot signals transmitted thereto from target BSs, but also performs the association during the scanning interval in such a manner that the procedure required during the handover can be performed in the scanning interval prior to the handover. That is, the term "association" identifies the handover process of the MS, which is performed prior to the actual handover. The process including steps 311 to 321 shown in FIG. 3 is previously carried out during the scanning interval before the handover, so the same process can be omitted or simplified during the handover. The time required for the handover can then be reduced. A time delay caused by the handover can be minimized if the association is carried out before the actual handover.

The association procedure will be described in detail with reference to FIG 4.

Referring to FIG 4, an MS 402 receives an MOB-NBR-ADV message from a serving BS 404, which is a first BS (BS#1), and obtains information related to the neighbor BSs from the MOB-NBR-ADV message (step 408). It is assumed that two neighbor BSs including a second BS (BS#2, 406) and a third BS (BS#3, not shown) are provided in FIG. 4. In addition, the second BS 406 will be selected as a target BS, and therefore the second BS 406 will be referred to as the "target BS".

When the MS 402 scans the CINR of the pilot signal, the MS 402 transmits the MOB-SCN-REQ message to the serving BS 404 (step 410). Table 1 shows a format of the MOB-SCN-REQ message transmitted to the serving BS 404 from the MS 402.

**Table 1**

| Syntax | Size | Notes |
|---|---|---|
| MOB-SCN-REQ Message Format (){ | | |
| Management Message Type = 50 | 8bits | |
| Scan Duration | 12bits | Units are frames |
| Reserved | 4bits | |
| } | | |

As shown in Table 1, the MOB-SCN-REQ message includes Management Message Type representing the type of information elements (IEs), that is, the type of messages to be transmitted, and Scan Duration representing a scanning interval used for scanning the CINRs of the pilot signals transmitted from neighbor BSs. The Scan Duration consists of frame units. According to the IEEE 802.16e communication system, when the MS 402 performs the association with respect to the second BS 406, which is the target BS, the MS 402 transmits the MOB-SCN-REQ message to the serving BS 404 of the MS 402 in the same manner that the MS 402 scans the CINRs of the pilot signals even if a request or a permission for the MOB-SCN-REQ message is not transmitted to the MS 402 from the serving BS 404.

Upon receiving the MOB-SCN-REQ message from the MS 402, the serving BS 404 transmits an MOB-SCN-RSP message to the MS 402 in response to the MOB-SCN-REQ message (step 412). Table 2 shows a format of the MOB-SCN-RSP message transmitted to the MS 402 from the BS 404.

**Table 2**

| Syntax | Size | Notes |
|---|---|---|
| MOB-SCN-RSP Message Format (){ | | |
| Management Message Type = 51 | 8bits | |
| CID | 16bits | basic CID of the MS |
| Duration | 12bits | in frames |
| Start Frame | 4bits | |
| } | | |

As shown in Table 2, the MOB-SCN-RSP message includes Management Message Type representing the type of the IEs, that is, the type of messages to be transmitted, CID of the MS 402 transmitting the MOB-SCN-REQ message, and Start Frame representing the start point of the scan operation. The MS 402 may wait for a frame interval, that is, an M-Frame 414 shown in the Start Frame and performs the scanning operation for the association. In addition, the MOB-SCN-RSP message is a response message for the MOB-SCN-REQ message transmitted from the MS 402 and notifies information related to the time required for scanning the CINR of the pilot signal. That is, the MOB-SCN-REQ message notifies the duration in frame units without representing information for the association.

As the scanning operation has been performed, the MS 402 obtains synchronisation with the target BS 406 (step 416). Then, the MS 402 transmits the RNG-REQ message to the target BS 406 through a contention-base random access scheme for the association procedure (step 420). Since the MS 402 transmits the RNG-REQ message to the target BS 406 through the contention-base random access scheme, the MS 402 may access the target BS 406 while competing with other MSs, so the time delay is lengthened. Table 3 shows a format of the RNG-REQ message.

**Table 3**

| Syntax | Size | Notes |
|---|---|---|
| RNG-REQ_Message Format (){ | | |
| Management Message Type = 4 | 8bits | |
| Downlink channel ID | 8bits | |
| TLV Encoded Information { | Variable | TLV Specific |
| MAC Version | TLV | Type = 148, Length = 1 Byte, Value = |
| | | 1: Indicates conformance with IEEE Std 802.16-2001 |
| | | 2: Indicates conformance with IEEE Std 802.16c-2002 and its predecessors |
| | | 3: Indicates conformance with IEEE Std 802.16a-2003 and its predecessors |
| | | 4: Indicates conformance with IEEE Std 802.16-2004 5-255: reserved |
| Required Downlink Burst Profile | TLV | Type = 1, Length = 1 Byte, Value = DIUC of the required DLBP |
| MS MAC Address | TLV | Type = 2, Length = 6 Bytes, Value = MS MAC Address |
| Ranging Anomalies | TLV | Type = 3, Length = 1 Byte, Value = A parameter indicating potential error condition detected by the MS during the ranging process |
| Serving BS ID | TLV | Type = 4, Length = 6 Bytes, Value = The Serving BS ID |
| Basic CID | TLV | Type = 6, Length = 2 Bytes, Value = Basic CID allocated from the former Serving BS |
| } | | |
| } | | |

As shown in Table 3, the RNG-REQ message includes Management Message Type representing the type of the IEs, that is, the type of messages to be transmitted, Downlink Channel ID, etc.

Upon receiving the RNG-REQ message from the MS 402, the target BS 406 transmits the RNG-RSP message to the MS 402 in response to the RNG-REQ message (step 422). The RNG-RSP message includes a frequency for the ranging, time, and information for adjusting the transmission power. In addition, the RNG-RSP message includes a service level predication (SLP) IE as shown in Table 4.

**Table 4**

| Name | Type (1byte) | Length | Value (variable-length) |
|---|---|---|---|
| Service Level Prediction | 17 | 1 | This value indicates the level of service the MS can expect from this BS. The following encodings apply: |
| | | | 0 = No service possible for this MS |
| | | | 1 = Some service is available for one or several Service Flows authorized for the MS. |
| | | | 2 = For each authorized Service Flow, a MAC connection can be established with QoS specified by the Authorized QoS ParamSet. |
| | | | 3- No service level prediction available. |

The values of the SLP shown in Table 4 are as follows:
[0] = No service is possible for this MS
[1] = Some service is available for one or several Service Flows authorized for the MS.
[2] = All services are possible for this MS.
[3]= No SLP available.

If the value of the SLP of the RNG-RSP is "2", the target BS 406 can provide the MS 402 with all of the services, so the MS 402 determines that the association with respect to the target BS 406 has been completed. Thus, the MS 402 stores information obtained through the ranging operation with regard to the target BS 406. That is, the MS 402 stores the information obtained through the transmission of the RNG-REQ message to the target BS 406 and the reception of the RNG-RSP message from the target BS 406 in a memory of the MS 402 in the form of a table (step 424).

As mentioned above, the MS 402 not only scans the CINRs of the pilot signals, but also performs the association with regard to the target BS 406 during a scanning interval 426. In addition, after the scanning interval 426, the MS 402 again communicates with the serving BS 404.

### SUMMARY OF THE INVENTION

As described above with reference to FIG 4, the MS performs the association procedure during the scanning interval prior to the handover, so the ranging operation may be performed within a short period of time without performing correcting processes for the ranging operation when the handover of the MS is carried out. That is, due to the association procedure of the MS with respect to the target BS, the handover of the MS can be performed at a high speed. However, as mentioned above, since the MS transmits the RNG-REQ message to the target BS through the contention-based random access scheme, a time delay may occur during the scanning interval due to the contention-based random access scheme. Such a time delay may interrupt the association procedure of the MS.

Accordingly, the present invention has been made to solve at least the above-mentioned problems occurring in the prior art, and an object of the present invention is to provide a system and a method for providing a handover operation capable of minimizing a service delay in a broadband wireless access communication system.

Another object of the present invention is to provide a system and a method for providing a handover procedure capable of performing an association procedure supporting a fast ranging, thereby minimizing a service delay in a broadband wireless access communication system.

To accomplish these and other objects, according to a first aspect of the present invention, there is provided a handover system capable of minimizing a service delay in a broadband wireless access communication system. The handover system comprises a mobile station (MS) for transmitting a request to a serving BS providing services to the MS in order to perform a part of handover process prior to the handover to a target BS if the MS determines that the handover from the serving BS to the target BS is necessary; a serving BS for transmitting a notification message to the target BS as the serving BS receives the request from the MS, in which the notification message notifies that the MS will perform the part of the handover process prior to the handover and includes information related to a time interval during which the part of the handover process is performed, and transmitting a response message in response to the request of the MS if the serving BS receives a notification response message from the target BS, in which the notification response message includes information related to services available for the MS and the response message includes information related to the services available for the MS included in the notification response message and the time interval; and a target BS for transmitting the notification response message to the serving BS.

According to a second aspect of the present invention, there is provided a handover system capable of minimizing a service delay in a broadband wireless access communication system. The handover system comprises a mobile station (MS) for transmitting a request to a serving BS by adding information related to a number of neighbor BSs selectable for a target BS to the request in order to perform a part of handover process prior to the handover to a target BS, if the MS determines that the handover from the serving BS to the target BS, which is selected from the neighbor BSs, is necessary; a serving BS for transmitting a notification message to the number of neighbor BSs as the serving BS receives the request, in which the notification message notifies that the MS will perform the part of the handover process prior to the handover and includes information related to a time interval during which the part of the handover processes is performed, selecting a neighbor BS from the number of neighbor BSs in order to allow the MS to perform the part of the handover process in relation to the selected neighbor BS if the serving BS receives a notification response message from the number of neighbor BSs, and transmitting a response message in response to the request of the MS, said response message includes information related to the time interval and the selected neighbor BS; and a number of neighbor BSs transmitting the notification response message to the serving BS, said notification response message includes information related to services available for the MS.

According to a third aspect of the present invention, there is provided a method for performing a handover capable of minimizing a service delay in a broadband wireless access communication system including a mobile station (MS), a serving base station (BS) providing services to the MS, and a target BS to which the MS hands over. The method comprises the steps of: detecting that the handover from the serving BS to the target BS is necessary; and transmitting a request to the serving BS in order to perform portions of a handover process prior to the handover to the target BS.

According to a fourth aspect of the present invention, there is provided a method for handover capable of minimizing a service delay in a broadband wireless access communication system including a mobile station (MS), a serving base station (BS) providing services to the MS, and a target BS to which the MS hands over. The method comprises the steps of: receiving a request from the MS, in which the request notifies that a part of handover process will be performed prior to the handover as the handover from the serving BS to the target BS is required; and transmitting a response message in response to the request, said response message includes information related to a time interval during which the part of the handover processes is performed.

According to a fifth aspect of the present invention, there is provided a method for handover capable of minimizing a service delay in a broadband wireless access communication system including a mobile station (MS), a serving base station (BS) providing services to the MS, and a target BS to which the MS hands over. The method comprises the steps of: receiving from the serving BS a message, which notifies that a part of handover process will be performed prior to the handover, when the MS needs to be handed over from the serving BS to the target BS; and transmitting a notification response message including information related to services available for the MS.

According to a sixth aspect of the present invention, there is provided a method for handover capable of minimizing a service delay in a broadband wireless access communication system including a mobile station (MS), a serving base station (BS) providing services to the MS, and a target BS to which the MS hands over. The method comprises the steps of: transmitting a request from the MS to the serving BS in order to be allowed the MS to perform a part of handover process prior to the handover to the target BS; transmitting a notification message from the serving BS to the target BS as the serving BS receives the request from the MS, in which the notification message notifies that the MS will perform the part of the handover processes prior to the handover and includes information related to a time interval during which the part of the handover processes is performed; transmitting a notification response message from the target BS to the serving BS, in which the notification response message includes information related to services available for the MS; and transmitting from the serving BS a response message in response to the request of the MS, said response message includes information related to the services available for the MS included in the notification response message and the time interval.

According to a seventh aspect of the present invention, there is provided a method for minimizing a service delay in a broadband wireless access communication system including a mobile station (MS), a serving base station (BS) providing services to the MS, and a plurality of neighbor BSs different from the serving BS. The method comprises the steps of: detecting that the handover from the serving BS to a target BS, which is selected from the neighbor BSs, is necessary; and transmitting a request to the serving BS by adding information related to a number of the neighbor BSs selectable for the target to perform a part of handover process prior to the handover to the target BS.

According to an eighth aspect of the present invention, there is provided a method for handover capable of minimizing a service delay in a broadband wireless access communication system including a mobile station (MS), a serving base station (BS) providing services to the MS, and a plurality of neighbor BSs different from the serving BS. The method comprises the steps of: receiving a request from the MS, in which the request notifies that a part of handover process will be performed prior to the handover as the handover from the serving BS to a target BS selected from the neighbor BSs is required, said request includes information related to a number of the neighbor BSs selectable for the target BS; and selecting a neighbor BS from the number of neighbor BSs for allowing the MS to perform the part of the handover process, and transmitting a response message in response to the request, said response message includes information related to a time interval during which the part of the handover processes is performed and the selected neighbor BS.

According to a ninth aspect of the present invention, there is provided a method for handover capable of minimizing a service delay in a broadband wireless access communication system including a mobile station (MS), a serving base station (BS) providing services to the MS, and a plurality of neighbor BSs different from the serving BS. The method comprises the steps of: transmitting a request from the MS to the serving BS by adding information related to a number of the neighbor BSs selectable for a target BS to the request in order to be allowed the MS to perform a part of handover process prior to the handover to the target BS, if the MS determines that the handover from the serving BS to the target BS, which is selected from the neighbor BSs, is necessary; transmitting a notification message from the serving BS to the number of neighbor BSs as the serving BS receives the request, in which the message notifies that the MS will perform the part of the handover process prior to the handover and includes information related to a time interval during which the part of the handover process is performed; transmitting a notification response message from the number of neighbor BSs to the serving BS, in which the notification response message includes information related to services available for the MS; and selecting a neighbor BS from the number of neighbor BSs by the serving BS in order to allow the MS to perform the part of the handover process in relation to the selected neighbor BS and transmitting from the serving BS a response message in response to the request of the MS, said response message includes information related to the time interval and the selected neighbor BS.

According to a tenth aspect of the present invention, there is provided a method of minimizing service delay for a handover process with a mobile station (MS) and a target base station (BS) in a broadband wireless access communication system including the MS, a serving BS providing services to the MS, and the target BS, the MS hands over from the serving BS to the target BS. The method comprises the steps of transmitting to the serving BS a message including a field representing information related to an association operation required for the handover process; and receiving from the serving BS a message including a response field for the association operation information and a field representing an association duration.

According to a eleventh aspect of the present invention, there is provided a method of minimizing service delay for a handover process with a mobile station (MS) and a target base station (BS) in a broadband wireless access communication system including the MS, a serving BS providing services to the MS, and the target BS, the MS hands over from the serving BS to the target BS. The method comprises the steps of receiving from the a message including a field representing information related to an association operation required for the handover process; and transmitting to the MS a message including a response field for the association operation information and a field representing an association duration.

### BRIEF DESCRIPTION OF THE DRAWINGS

The above and other objects, features and advantages of the present invention will be more apparent from the following detailed description taken in conjunction with the accompanying drawings, in which:
FIG. 1 is a diagram illustrating a structure of a conventional IEEE 802.16e communication system;
FIG 2 is a signal flowchart illustrating a handover process in a conventional IEEE 802.16e communication system;
FIG. 3 is a signal flowchart illustrating a network re-entry procedure shown in FIG. 2;
FIG 4 is a signal flowchart illustrating an association procedure in a conventional IEEE 802.16e communication system;
FIG 5 is a signal flowchart illustrating an association procedure in an IEEE 802.16e communication system according to an embodiment of the present invention;
FIG 6 is a signal flowchart illustrating a procedure of transmitting an MOB-SCN-REQ message by means of an MS shown in FIG. 5 according to an embodiment of the present invention;
FIG 7 is a flowchart illustrating a procedure of transmitting an MOB-SCN-RSP message by means of a serving BS shown in FIG 5 according to an embodiment of the present invention;
FIG 8 is a flowchart illustrating a procedure of transmitting an MOB-SCN-RSP message by means of a serving BS shown in FIG 5 according to another embodiment of the present invention;
FIG 9 is a flowchart illustrating a procedure of transmitting an SCN-NOTIFICATION-RSP message by means of a target BS shown in FIG. 5 according to an embodiment of the present invention; and
FIG 10 is a flowchart illustrating a procedure of transmitting an MOB-SCN-RSP message by means of an MS shown in FIG. 5 according to an embodiment of the present invention.

### DETAILED DESCRIPTION OF THE PREFERRED EMBODIMENT

Hereinafter, embodiments of the present invention will be described with reference to the accompanying drawings. In the following detailed description, a detailed description of known functions and configurations incorporated herein will be omitted when it may make the subject matter of the present invention unclear.

The present invention provides a method for minimizing a service delay derived from an handover of a mobile station (MS) by allowing the MS to perform an association procedure before it is handed over from a serving base station (serving BS) to a target BS in a broadband wireless access (BWA) communication system, such as an Electrical and Electronics Engineers (IEEE) 802.16e communication system. According to the present invention, the MS performs the association procedure in a scanning interval prior to the handover of the MS to the target BS, thereby minimizing the service delay. It should be noted that the present invention is applicable not only to the IEEE 802.16e communication system, but also for various other communication systems.

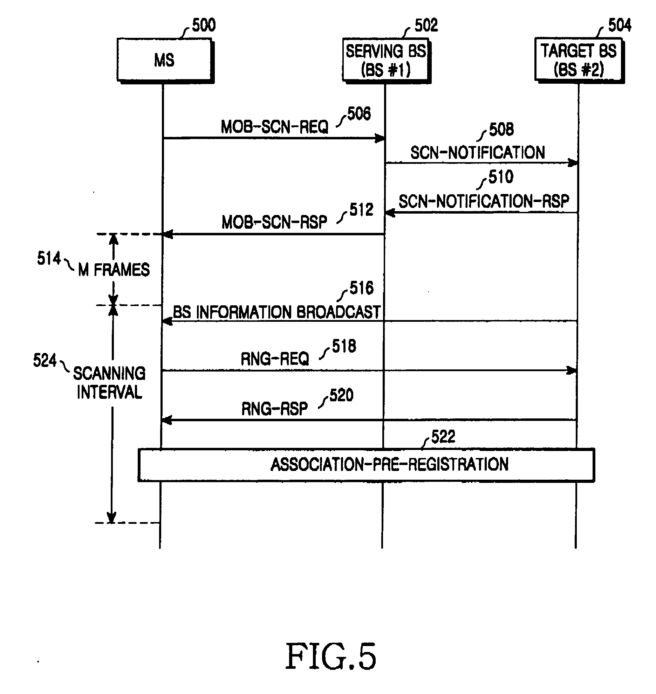

FIG 5 is a signal flowchart illustrating the association procedure in the IEEE 802.16e communication system according to an embodiment of the present invention.

Referring to FIG 5, an MS 500 receives a neighbor advertisement (MOB-NBR-ADV) message (not shown) from a serving BS 502, which is a first BS (BS#1), and obtains information related to neighbor BSs from the MOB-NBR-ADV message. In the following description, a second BS (BS#2, 504) will be selected as a target BS, so the second BS 504 will be referred to as the "target BS".

If the MS 500 decides to perform the association prior the handover, the MS 500 transmits a scanning interval allocation request (MOB-SCN-REQ) message to the serving BS 502 (step 506). Different from the MOB-SCN-REQ message used in the conventional IEEE 802.16e communication system as shown in Table 1, the MOB-SCN-REQ message of the present invention includes information used for discriminating the scanning operation of the MS 500 from the association operation of the MS 500. That is, since the MS 500 transmits the MOB-SCN-REQ message to the serving BS 502 in order to request a permission for the association operation, a scan type "1" and the IDs of target BSs for the association of the MS 500 are denoted in the MOB-SCN-REQ message. The MS 500 aligns the target BSs according to the information of the target BSs stored in the MS 500 and records the IDs of the target BSs according to the alignment order of the target BSs. The method of selecting the target BSs by means of the MS 500 does not directly relate to the present invention, so it will be omitted below.

FIG. 5 shows a format of the MOB-SCN-REQ message according to the present invention.

**Table 5**

| Syntax | Size | Notes |
|---|---|---|
| MOB-SCN-REQ Message Format() { | | |
| Management Message Type = 50 | 8bits | |
| Scan Duration | 12bits | Unit: frame |
| Scan Type | 1bit | 0: Scanning 1: Association |
| Reserved | 3bits | |
| For (j=0 : j<N Recommended j++){ | | |
| Target BS-ID | 48bits | |
| } | | |
| } | | |

As shown in Table 5, the MOB-SCN-REQ message includes Management Message Type representing the type of information elements (IEs), that is, the type of messages to be transmitted, and Scan Duration representing a scanning interval (scan type == 0) used for scanning for carrier to interference and noise ratios (CINRs) of the pilot signals transmitted from the neighbor BSs or a scanning interval (scan type == 1) used for the association with respect to the target BSs. The Scan Duration consists of frame units. If the MOB-SCN-REQ message is transmitted to the serving BS 502 in order to scan for the CINRs of the pilot signals transmitted from the neighbor BSs, the scan type is set to "0". In addition, if the MOB-SCN-REQ message is transmitted to the serving BS 502 for the purpose of the association with respect to the neighbor BSs, the scan type is set to "1".

Upon receiving the MOB-SCN-REQ message from the MS 500, the serving BS 502 determines that the MS 500 may perform the association if the scan type included in the MOB-SCN-REQ message is "1", so the serving BS 502 transmits a scan notification (SCN-NOTIFICATION) message as shown in Table 6 to the target BSs corresponding to the target BS-IDs included in the MOB-SCN-REQ message (step 508). It should be noted that FIG 5 shows only one target BS 504 selected from among various target BSs.

**Table 6**

| Syntax | Size | Notes |
|---|---|---|
| Global header { | | |
| For (j=0 : j<Num Records : j++){ | 8bits | |
| MS unique Identifier | 48bits | ID of the MS performing the association |
| Estimated time to Association | 16bits | Unit: frame |
| Required BW | 8bits | BW required for providing service to the MS |
| For (i=0 : i<Num_SIFD_Records : i++){ | | |
| SFID | 32bits | SFID for service provided to the MS |
| For (i=0 : i<Num_QoS_Records : i++){ | | |
| Required QoS | variable | QoS of service provided to the MS |
| } | | |
| } | | |
| } | | |
| } | | |

As shown in Table 6, the SCN-NOTIFICATION message includes "MS unique Identifier" representing an ID of the MS performing the association, "Estimated time to Association" representing information related to a point of time for the association, "Required BW" representing a bandwidth required for providing a service to the MS, "service flow ID (SFID)" representing information related to the service provided to the MS, and "Required QoS" representing the QoS of the service provided to the MS.

The serving BS 502 transmits the SCN-NOTIFICATION message to the target BSs in order to notify the target BSs of the association of the MS 500 and information related to the service provided to the MS 500. The target BS 504 receiving the SCN-NOTIFICATION message from the serving BS 502 detects the Required QoS included in the SCN-NOTIFICATION message and determines if the target BS 504 can provide the service corresponding to the Required QoS. In addition, the target BS 504 transmits a scan notification response (SCN-NOTIFICATION-RSP) message to the serving BS 502 in response to the SCN-NOTIFICATION message by adding the QoS, which can be provided by the target BS 504, to the SCN-NOTIFICATION-RSP message (step 510). When the MS corresponding to the MS-ID included in the SCN-NOTIFICATION message initially accesses the target BS 504, the target BS 504 allows the MS to access to the target BS 504 through a fast ranging IE. In this case, the target BS 504 adds a fast uplink ranging IE (fast UL ranging IE) for the MS to an uplink map (UL-MAP) message corresponding to a value of the Estimated time to Association included in the SCN-NOTIFICATION message. Since the target BS 504 can predict the access time of the MS 500 based on the value of the Estimated time to Association, the target BS 504 may add the fast UL ranging IE, which will be allocated to the MS, to the UL-MAP message after waiting for a predetermined period of time corresponding to the value of the Estimated time to Association.

Table 7 shows a format of the SCN-NOTIFICATION-RSP message.

**Table 7**

| Syntax | Size | Notes |
|---|---|---|
| Global Header | | |
| For (j=0 : j<Num_SIFD_Records : j++){ | | |
| MS unique Identifier | 48bits | ID of the MS performing the |
| | | association |
| BW estimated | 8bits | BW available for the MS |
| QoS estimated | 8bits | QoS available for the MS |
| } | | |

As shown in Table 7, the SCN-NOTIFICATION-RSP message includes "MS unique Identifier" representing an ID of the MS included in the SCN-NOTIFICATION message, "BW estimated" representing a bandwidth which can be provided to the MS from the target BS, and "QoS estimated" representing the QoS which can be provided to the MS from the target BS.

Upon receiving the SCN-NOTIFICATION-RSP message from the target BS 504, the serving BS 502 selects the target BSs capable of providing a normal service to the MS 500 during the handover of the MS 500 based on information included in the SCN-NOTIFICATION-RSP message. In addition, the serving BS 502 aligns the target BSs in an order of service quality for the MS 500 and creates a list of the target BSs according to the alignment order of the target BSs. The serving BS 502 then transmits a mobile scanning interval allocation response (MOB-SCN-RSP) message to the MS 500 in response to the MOB-SCN-REQ message by adding information of the target BS list to the MOB-SCN-RSP message (step 512).

**Table 8**

| Syntax | Size | Notes |
|---|---|---|
| MOB-SCN-RSP Message Format(){ | | |
| Management Message Type = 51 | 8bits | |
| CID | 16bits | |
| Scan Duration | 12bits | Unit: Frame |
| Start Frame | 4bits | |
| Scan Type | 1bit | 0: Scanning 1: Association |
| Reserved | 7bits | |
| For (j=0 : j<N Recommended : j++){ | | |
| Target BS-ID | 48bits | |
| Service Level Prediction | 8bits | |
| } | | |
| } | | |

As shown in Table 8, the MOB-SCN-RSP message includes "Management Message Type" representing the type of IEs, that is, the type of messages to be transmitted, and "connection ID (CID)" representing the CID of the MS transmitting the MOB-SCN-REQ message. If a value of Scan Type of the MOB-SCN-RSP message is "0", the serving BS does not allow the association operation of the MS, so the MS performs the scanning operation for measuring the CINRs of the pilot signals transmitted from neighbor BSs. If a value of Scan Type of the MOB-SCN-RSP message is "1", the serving BS allows the MS to perform the association operation.

In addition, the MOB-SCN-RSP message can be unsolicitedly transmitted to the MS even if the MS does not transmit the MOB-SCN-REQ message to the serving BS, if the serving BS allows the MS to scan the CINRs of the pilot signals or to perform the association procedure.

According to the present invention, since the association operation of the MS is performed during the scanning interval allocated by the serving BS, the serving BS transmits a message to the target BS in order to notify the target BS of the association of the MS. Such a message is called the "SCN-NOTIFICATION" message. However, it should be noted that the SCN-NOTIFICATION message does not notify the target BS of the scanning operation of the MS for the CINRs of the pilot signals. Since the scanning operation of the MS for the CINRs of the pilot signals can be performed through a communication between the MS and the serving BS, an object of the SCN-NOTIFICATION message transmitted to the target BS from the serving BS is just to notify the target BS of the association of the MS.

The MS 500 receiving the MOB-SCN-RSP message performs the scanning operation in relation to the target BSs in the same manner as described with reference to FIG. 4. In addition, the MS 500 can request access to the target BS 504 for the purpose of the association while performing the scanning operation. In this case, the MS 500 transmits a ranging-request (RNG-REQ) message to the target BS (step 518). As described above with reference to FIG. 4, it is impossible for the target BS to previously recognize the association of the MS in the conventional IEEE 802.16e communication system, so the MS transmits the RNG-REQ message to the target BS through the contention-base random access scheme. However, according to the present invention, the target BS can previously recognize the association operation of the MS due to the SCN-NOTIFICATION message transmitted thereto from the serving BS, so the target BS 504 broadcasts BS information by adding the fast UL ranging IE for the MS performing the association to the BS information in such a manner that the MS can transmit the RNG-REQ message to the target BS through a contention-free access scheme for the initial access of the MS (step 516).

Description will be made in detail in relation to the fast UL ranging.

First, the MS 500 obtains downlink synchronization with the target BS 504 in order to access the target BS 504 and receives the DL-MAP message and the UL-MAP message from the target BS 504. The DL-MAP message includes parameters related to the downlink of the target BS 504, and the UL-MAP message includes parameters related to the uplink of the target BS 504. In addition, the DL-MAP message and the UL-MAP message may include the fast UL ranging IE allocated by the target BS 504 for supporting the fast UL ranging of the MS 500 performing the handover. The reason for allocating the fast UL ranging IE to the MS 500 is to reduce time delay which may occur because the MS 500 performs the association operation in addition to the scanning operation for the CINRs of the pilot signals. The MS 500 performs an initial ranging with respect to the target BS 504 through the contention-free scheme corresponding to the fast UL ranging IE. Table 9 shows a format of the fast UL ranging IE included in the UL-MAP message.

**Table 9**

| Syntax | Size | Notes |
|---|---|---|
| Fast UL ranging IE{ | | |
| MAC address | 48bits | MS MAC address as provided on the RNG-REQ message on initial system entry |
| UIUC | 4bits | UIUC ≠ 15. A four-bit code used to define the type of uplink access and the burst type associated with that access. |
| OFDM System offset | 10bits | The offset of the OFDM symbol in which the burst starts, the offset value is defined in units of OFDM symbols and is relevant to the Allocation Start Time field given in the UL-MAP message. |
| Subchannel offset | 6bits | The lowest index OFDMA subchannel used for carrying the burst, starting from subchannel 0. |
| No. OFDM Symbols | 10bits | The number of OFDM symbols that are used to carry the UL Burst. |
| No. Subchannels | 6bits | The number of OFDMA symbols with subsequent indexes, sued to carry the burst. |
| Reserved | 4bits | |
| } | | |

As shown in Table 9, the fast UL ranging IE includes a medium access control (MAC) address of the MS having a ranging opportunity, an uplink interval usage code (UIUC) providing region information for recording an initial offset value for the fast UL ranging, numbers of offsets and symbols, and information related to the number of subchannels. The MAC address of the MS 500 has been already notified to the target BS 504 in a backbone network through the SCN-NOTIFICATION message transmitted to the target BS 504 from the serving BS 502.

Upon receiving the UL-MAP message 500, the MS 500 transmits the RNG-REQ message to the target BS 504 corresponding to the fast UL ranging IE (step 518), so that the target BS 504 receiving the RNG-REQ message transmits the RNG-RSP message including information for correcting the frequency, time and transmission power for the ranging to the MS 500 (step 520). The procedure performed after the MS 500 has received the RNG-RSP message in FIG. 5 is identical to the procedure performed after the MS 402 has received the RNG-RSP message in FIG. 4, so it will not be further described below.

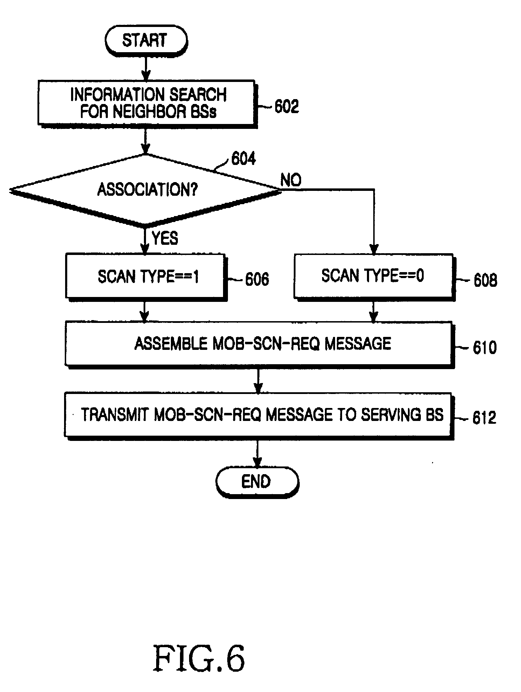

A procedure of transmitting the MOB-SCN-REQ message by means of the MS 500 shown in FIG. 5 will be described with reference to FIG 6.

FIG 6 is a signal flowchart illustrating a procedure of transmitting the MOB-SCN-REQ message by means of the MS 500 shown in FIG 5 according to an embodiment of the present invention.

Referring to FIG 6, the MS 500 searches for information related to the neighbor BSs (step 602). The information related to the neighbor BSs may include the CINRs of the pilot signals transmitted to the MS 500 from the neighbor BSs. The MS 500 then determines if it is necessary to perform the association based on the information related to the neighbor BSs (step 604). If it is determined in step 604 that the association is necessary, step 606 is carried out. The MS 500 selects the target BS from among the neighbor BSs. The method of selecting the target BS by means of the MS 500 does not directly relate to the present invention, so it will be omitted below. In step 606, the MS 500 sets the value of the scan type to "1" in such a manner that time for the association operation can be allocated to the MS 500, and step 610 is then performed.

If it is determined in step 604 that the association is not necessary, step 608 is carried out. In step 608, if it is necessary for the MS 500 to search the information related to the neighbor BSs without performing the association operation, that is, if it is necessary for the MS 500 to scan for the CINRs of the pilot signals transmitted from the neighbor BSs, the MS 500 sets the value of the scan type to "0" and step 610 is performed.

In step 610, the MS 500 sets up the MOB-SCN-REQ message by adding the scan type value to the MOB-SCN-REQ message. Then, the MS 502 transmits the MOB-SCN-REQ message to the serving BS 502 (step 612).

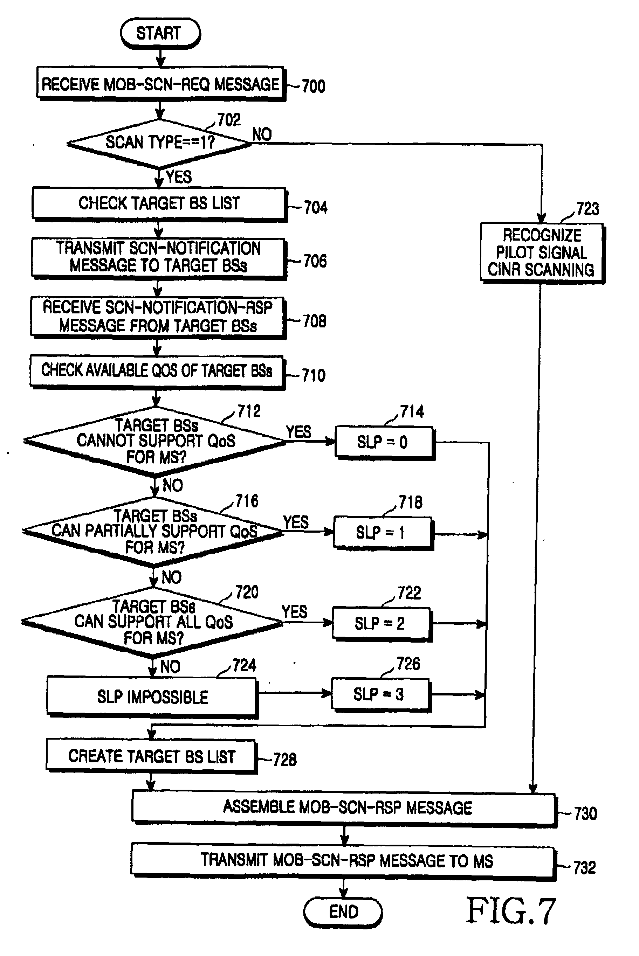

A procedure of transmitting the MOH-SCN-RSP message by means of the serving BS 502 shown in FIG. 5 will be described with reference to FIG. 7.

FIG 7 is a flowchart illustrating the procedure of transmitting the MOB-SCN-RSP message by means of the serving BS 502 shown in FIG 5 according to an embodiment of the present invention.

Referring to FIG. 7, the serving BS 502 receives the MOB-SCN-REQ message from the MS 500 (step 700). Then, the serving BS 502 determines if the value of the scan type included in the MOB-SCN-REQ message is set to "1" (scan type == 1) (step 702). If it is determined in step 702 that the scan type value is not "1", that is, if the scan type value is set to "0", step 723 is performed. In step 723, the serving BS 502 recognizes that the MS 500 requests the scanning operation for the CINRs of the pilot signals, and then step 730 is performed.

If it is determined in step 702 that the scan type value is set to "1", step 704 is performed. In step 704, the serving BS 502 recognizes that the MS 500 requests the association operation. Accordingly, the serving BS 502 checks the list of the target BSs included in the MOB-SCN-REQ message. The serving BS 502 checks the target BSs corresponding to the target BS-IDs from the list of the target BSs.

The serving BS 502 then transmits the SCN-NOTIFICATION message to the target BSs in order to notify the target BSs of the association of the MS 500 (step 706). The serving BS 502 then receives the SCN-NOTIFICATION-RSP message from the target BSs in response to the SCN-NOTIFICATION message (step 708). The serving BS 502 also checks the QoS of services, which can be provided to the MS 500 from the target BSs, based on the SCN-NOTIFICATION-RSP message (step 710). The serving BS 502 may check the QoS of the services provided to the MS 500 from the target BSs by using the required QoS included in the SCN-NOTIFICATION-RSP message.

The serving BS 502 then determines if the target BSs can support the predetermined QoS for the MS 500 (step 712). If it is determined in step 712 that the target BSs cannot support the predetermined QoS for the MS 500, step 714 is performed. In step 714, the serving BS 502 sets the value of the service level prediction (SLP) IE to "0" (SLP==0). Then, the serving BS 502 performs step 728.

If it is determined in step 712 that the target BSs can support the predetermined QoS for the MS 500, step 716 is performed. In step 716, the serving BS 502 determines if the target BSs can partially support the QoS for the MS 500. If it is determined in step 716 that the target BSs can partially support the QoS for the MS 500, step 718 is performed. In step 718, since the target BSs can partially support the QoS for the MS 500, the serving BS 502 sets the value of the SLP IE to "1" (SLP==1). The serving BS 502 performs step 728.

If it is determined in step 716 that the target BSs does not partially support the QoS for the MS 500, step 720 is performed. In step 720, the serving BS 502 determines if the target BSs can support all of the QoS for the MS 500. If it is determined in step 720 that the target BSs can support all of the QoS for the MS 500, step 722 is performed. In step 722, since the target BSs can support all of the QoS for the MS 500, the serving BS 502 sets the value of the SLP IE to "2" (SLP==2). The serving BS 502 then performs step 728.

If it is determined in step 720 that the target BSs cannot support all of the QoS for the MS 500, step 724 is performed. In step 724, the serving BS 502 determines that the SLP for the target BSs is impossible. Thus, the serving BS 502 performs step 726. In step 726, since the SLP for the target BSs is impossible, the serving BS 502 sets the value of the SLP IE to "3" (SLP==3). The serving BS 502 then performs step 728.

In step 728, the serving BS 502 creates the list of the target BSs based on the SLP IE values. The serving BS 502 then sets up the MOB-SCN-RSP message in response to the MOB-SCN-REQ message by adding the list of the target BSs and response information for the MOB-SCN-REQ message to the MOB-SCN-RSP message (step 730). The serving BS 502 then transmits the MOB-SCN-RSP message to the MS 500 (step 732).

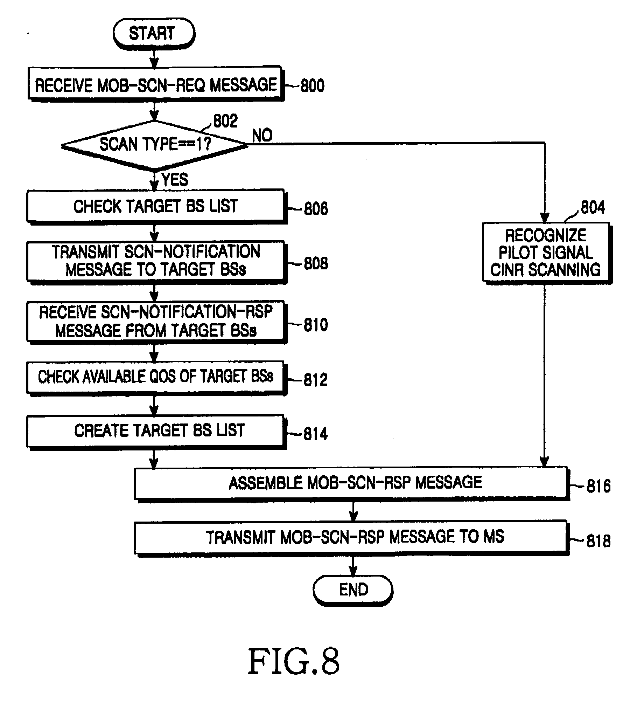

As described above with reference to steps 710 to 724 of the procedure of transmitting the MOB-SCN-RSP message to the MS 500 in response to the MOB-SCN-REQ message, the method of selecting the target BS for supporting the association operation of the MS does not directly relate to the present invention. Therefore, the procedure of transmitting the MOB-SCN-RSP message to the MS 500 in response to the MOB-SCN-REQ message can be simplified as shown in FIG. 8.

FIG. 8 is a flowchart illustrating the procedure of transmitting the MOB-SCN-RSP message by means of the serving BS 502 shown in FIG. 5 according to another embodiment of the present invention.

Prior to explaining the procedure shown in FIG 8, it should be noted that the steps shown in FIG 8 will not be further described below, if they are identical to the steps shown in FIG 7. That is, steps 800 to 810 are identical to steps 700 to 709 and 722, and steps 814 to 818 are identical to steps 728 to 732, so description thereof will be omitted below.

Referring to FIG 8, as the serving BS 502 receives the SCN-NOTIFIACTION-RSP message, the serving BS 502 selects the target BS for supporting the association of the MS 500 (step 812). At this time, as described above with reference to FIG 7, the serving BS 502 selects the target BSs by taking the QoS for the MS 500 or standards corresponding to a network state into consideration. Then, the serving BS 502 aligns the target BSs according to the priority thereof, thereby creating the list of the target BSs (step 814).

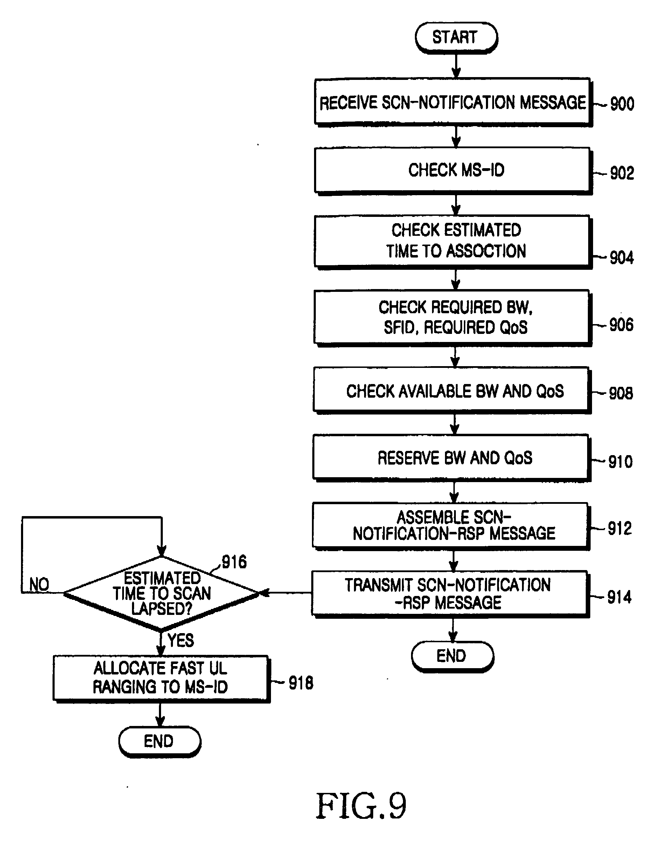

A procedure of transmitting the SCN-NOTIFICATION-RSP message by means of the target BS 504 shown in FIG 5 will be described with reference to FIG. 9.

FIG. 9 is a flowchart illustrating the procedure of transmitting an SCN-NOTIFICATION-RSP message by means of the target BS 504 shown in FIG. 5 according to an embodiment of the present invention.

Referring to FIG 9, the target BS 504 receives the SCN-NOTIFIACTION message from the serving BS 502 (step 900). The target BS 504 then checks the MS-ID of the MS 500 performing the association operation (step 902). The target BS 504 then checks the Estimated time to Association IE in order to determines if the MS 500 accesses the target BS 504 for the association operation (step 904).

The target BS 504 then checks the required BW, SFID and required QoS included in the SCN-NOTIFICATION message (step 906). The target BS 504 then checks the BW and QoS, which can be provided to the MS 500 from the target BS 504 (step 908). The target BS 504 then reserves the BW and QoS resources (step 910).

The target BS 504 then sets up the SCN-NOTIFICATION-RSP message in response to the SCN-NOTIFICATION message based on information related to the BW and QoS resources (step 912). The target BS 504 also transmits the SCN-NOTIFICATION message to the serving BS 502 (step 914). The target BS 504 then determines if the time set in the Estimated time to Association IE detected from the SCN-NOTIFICATION message has lapsed (step 916). If it is determined in step 916 that the time set in the Estimated time to Association IE has lapsed, step 918 is performed. In step 918, the target BS 504 allocates the fast UL ranging IE to the UL-MAP in such a manner that the MS 500 can access the target BS 504 through the contention-free access scheme. As described above, the target BS 504 allocates the fast UL ranging IE to the UL-MAP when the MS 500 accesses the target BS 504 after it detects if the MS 500 tries to access the target BS 504, so that the MS 500 can access the target BS 504 through the contention-free access scheme.

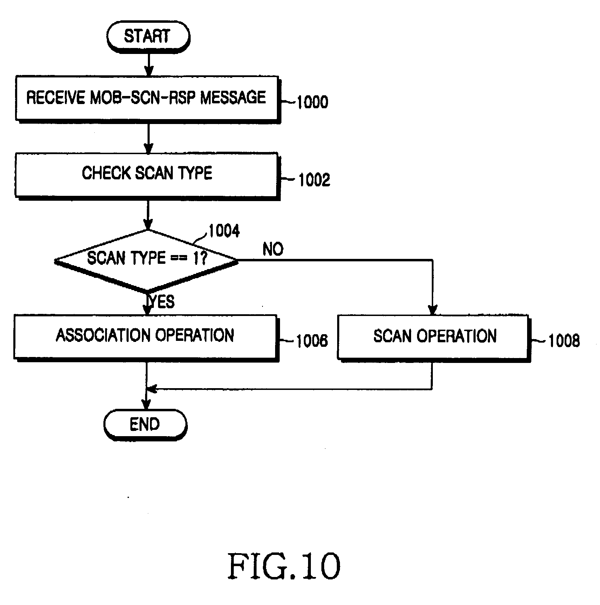

A procedure of transmitting the MOB-SCN-RSP message by means of the MS 500 shown in FIG 5 will be described with reference to FIG. 10.

FIG. 10 is a flowchart illustrating the procedure of transmitting the MOB-SCN-RSP message by means of the MS 500 shown in FIG. 5 according to an embodiment of the present invention.

Referring to FIG 10, the MS 500 receives the MOB-SCN-RSP message in response to the MOB-SCN-REQ message transmitted to the serving BS from the MS 500 (step 1000). The MOB-SCN-RSP message can be unsolicitedly transmitted to the MS 500 from the serving BS even if the MS 500 does not transmit the MOB-SCN-REQ message to the serving BS. Then, the MS 500 checks the scan type IE included in the MOB-SCN-RSP message (step 1002). The MS 500 determines if the value of the scan type IE is set to "1" (scan type = 1) (step 1004). If it is determined in step 1004 that the value of the scan type IE is set to "1", step 1006 is performed. In step 1006, the MS 500 performs the association operation with respect to the target BS 504 after waiting for a predetermined period of time corresponding to the start frame included in the MOB-SCN-RSP message. The MS 500 performs the association operation during the scan interval, that is, the scan duration. Since the association operation has been already described above, it will not be further described below.

If it is determined in step 1004 that the value of the scan type IE is not "1", that is, if the value of the scan type IE is set to "0", step 1008 is performed. In step 1008, the MS 500 performs the scanning operation for the CINRs of the pilot signals after waiting for a predetermined period of time corresponding to the start frame included in the MOB-SCN-RSP message. At this time, the MS 500 performs the scanning operation during the scan interval, that is, the scan duration.

As described above, according to the present invention, the MS may perform the association prior to the handover so that the MS can previously access the target BS, enabling the fast handover. In addition, according to the present invention, the serving BS notifies the target BS of the association of the MS before the MS accesses the target BS, so that the target BS can allocate the fast ranging IE to the UP-MAP for the association of the MS. Accordingly, the MS can perform the association at a high speed through the contention-free access scheme.

While the present invention has been shown and described with reference to certain preferred embodiments thereof, it will be understood by those skilled in the art that various changes in form and details may be made therein without departing from the spirit and scope of the invention as defined by the appended claims.

## Claims

1. A method for performing a handover capable of minimizing a service delay in a broadband wireless access communication system including a mobile station (MS), a serving base station (BS) providing services to the MS, and a target BS to which the MS hands over, the method comprising the steps of:
detecting that the handover from the serving BS to the target BS is necessary; and
transmitting a request to the serving BS in order to perform portions of a handover process prior to the handover to the target BS.

2. The method as claimed in claim 1, further comprising the steps of:
receiving a response message for the request from the serving BS, said the response message including information related to a time interval during which the part of the handover processes is performed; and
performing the portion of the handover process corresponding to the information related to the time interval.

3. The method as claimed in claim 2, wherein the portion of the handover process is performed by using contention-free resources allocated from the target BS.

4. A method for handover capable of minimizing a service delay in a broadband wireless access communication system including a mobile station (MS), a serving base station (BS) providing services to the MS, and a target BS to which the MS hands over, the method comprising the steps of:
receiving a request from the MS, in which the request notifies that a part of handover process will be performed prior to the handover as the handover from the serving BS to the target BS is required; and
transmitting a response message in response to the request, said response message includes information related to a time interval during which the part of the handover processes is performed.

5. The method as claimed in claim 4, further comprising a step of transmitting to the target BS a message, which notifies that the MS will perform the part of the handover process during the time interval.

6. The method as claimed in claim 5, further comprising a step of receiving from the target BS a notification response message including information related to services available for the MS.

7. The method as claimed in claim 6, wherein the notification response message is based on the information related to the services available for the MS included in the response message.

8. A method for handover capable of minimizing a service delay in a broadband wireless access communication system including a mobile station (MS), a serving base station (BS) providing services to the MS, and a target BS to which the MS hands over, the method comprising the steps of:
receiving from the serving BS a message, which notifies that a part of handover process will be performed prior to the handover, when the MS needs to be handed over from the serving BS to the target BS; and
transmitting a notification response message including information related to services available for the MS.

9. The method as claimed in claim 8, wherein the message includes information related to a time interval during which the MS performs the part of the handover process.

10. The method as claimed in claim 9, further comprising a step of allocating contention-free resources in order to allow the MS to perform the part of the handover process during the time interval.

11. The method as claimed in claim 10, further comprising a step of performing the part of the handover process during the time interval with the MS using the allocated contention-free resources.

12. A method for handover capable of minimizing a service delay in a broadband wireless access communication system including a mobile station (MS), a serving base station (BS) providing services to the MS, and a target BS to which the MS hands over, the method comprising the steps of:
transmitting a request from the MS to the serving BS in order to be allowed the MS to perform a part of handover process prior to the handover to the target BS;
transmitting a notification message from the serving BS to the target BS as the serving BS receives the request from the MS, in which the notification message notifies that the MS will perform the part of the handover processes prior to the handover and includes information related to a time interval during which the part of the handover processes is performed;
transmitting a notification response message from the target BS to the serving BS, in which the notification response message includes information related to services available for the MS; and
transmitting from the serving BS a response message in response to the request of the MS, said response message includes information related to the services available for the MS included in the notification response message and the time interval.

13. The method as claimed in claim 12, further comprising a step of allocating contention-free resources by the target BS in order to allow the MS to perform the part of the handover process during the time interval after the target BS is notified that the MS will perform the part of the handover processes prior to the handover.

14. The method as claimed in claim 13, further comprising a step of performing the part of the handover process during the time interval by the MS using the allocated contention-free resources after the MS has received the response message from the serving BS.

15. A method for handover capable of minimizing a service delay in a broadband wireless access communication system including a mobile station (MS), a serving base station (BS) providing services to the MS, and a plurality of neighbor BSs different from the serving BS, the method comprising the steps of:
detecting that the handover from the serving BS to a target BS, which is selected from the neighbor BSs, is necessary; and
transmitting a request to the serving BS by adding information related to a number of the neighbor BSs selectable for the target to perform a part of handover process prior to the handover to the target BS.

16. The method as claimed in claim 15, further comprising the steps of:
receiving a response message for the request from the serving BS, in said response message includes information related to a neighbor BS selected from the number of neighbor BSs in order to allow the MS to perform the part of the handover process and a time interval during which the part of the handover process is performed; and
performing the part of the handover process in relation to the selected neighbor BSs corresponding to the information related to the time interval.

17. The method as claimed in claim 16, wherein the part of the handover process is performed by using contention-free resources allocated from the selected neighbor BS.

18. A method for handover capable of minimizing a service delay in a broadband wireless access communication system including a mobile station (MS), a serving base station (BS) providing services to the MS, and a plurality of neighbor BSs different from the serving BS, the method comprising the steps of:
receiving a request from the MS, in which the request notifies that a part of handover process will be performed prior to the handover as the handover from the serving BS to a target BS selected from the neighbor BSs is required, said request includes information related to a number of the neighbor BSs selectable for the target BS; and
selecting a neighbor BS from the number of neighbor BSs for allowing the MS to perform the part of the handover process, and transmitting a response message in response to the request, said response message includes information related to a time interval during which the part of the handover processes is performed and the selected neighbor BS.

19. The method as claimed in claim 18, further comprising a step of transmitting a notification message, which notifies that the MS will perform the part of the handover process during the time interval, to the number of neighbor BSs.

20. The method as claimed in claim 19, further comprising a step of receiving a notification response message including information related to services available for the MS from the number of neighbor BSs.

21. The method as claimed in claim 20, wherein the neighbor BS capable of providing the MS with a maximum quality of service (QoS) is selected from the number of neighbor BSs based on the information related to the services available for the MS included in the notification response message transmitted from the number of neighbor BSs in order to allow the MS to perform the part of the handover process in relation to the selected neighbor BS.

22. The method as claimed in claim 18, wherein the response message is based on the information related to the services available for the MS included in the notification response message.

23. A method for handover capable of minimizing a service delay in a broadband wireless access communication system including a mobile station (MS), a serving base station (BS) providing services to the MS, and a plurality of neighbor BSs different from the serving BS, the method comprising the steps of:
transmitting a request from the MS to the serving BS by adding information related to a number of the neighbor BSs selectable for a target BS to the request in order to be allowed the MS to perform a part of handover process prior to the handover to the target BS, if the MS determines that the handover from the serving BS to the target BS, which is selected from the neighbor BSs, is necessary;
transmitting a notification message from the serving BS to the number of neighbor BSs as the serving BS receives the request, in which the message notifies that the MS will perform the part of the handover process prior to the handover and includes information related to a time interval during which the part of the handover process is performed;
transmitting a notification response message from the number of neighbor BSs to the serving BS, in which the notification response message includes information related to services available for the MS; and
selecting a neighbor BS from the number of neighbor BSs by the serving BS in order to allow the MS to perform the part of the handover process in relation to the selected neighbor BS and transmitting from the serving BS a response message in response to the request of the MS, said response message includes information related to the time interval and the selected neighbor BS.

24. The method as claimed in claim 23, wherein the neighbor BS capable of providing the MS with a maximum quality of service (QoS) is selected from the number of neighbor BSs by the serving BS based on the information related to the services available for the MS included in the notification response message transmitted from the number of neighbor BSs in order to allow the MS to perform the part of the handover process in relation to the selected neighbor BS.

25. The method as claimed in claim 24, wherein the response message of the serving BS is based on the information related to the services available for the MS included in the notification response message of the selected neighbor BS.

26. The method as claimed in claim 25, further comprising a step of performing the part of the handover process in relation to the selected neighbor BS by the MS during the time interval when the MS receives the response message from the serving BS.

27. The method as claimed in claim 26, further comprising a step of allocating contention-free resources by the selected neighbor BS in order to allow the MS to perform the part of the handover process during the time interval after the selected neighbor BS is notified that the MS will perform the part of the handover process prior to the handover.

28. The method as claimed in claim 27, further comprising a step of performing the part of the handover process during the time interval by the MS using the allocated contention-free resources after the MS has received the response message from the serving BS.

29. A handover system capable of minimizing a service delay in a broadband wireless access communication system, the handover system comprising:
a mobile station (MS) for transmitting a request to a serving BS providing services to the MS in order to perform a part of handover process prior to the handover to a target BS if the MS determines that the handover from the serving BS to the target BS is necessary;
a serving BS for transmitting a notification message to the target BS as the serving BS receives the request from the MS, in which the notification message notifies that the MS will perform the part of the handover process prior to the handover and includes information related to a time interval during which the part of the handover process is performed, and transmitting a response message in response to the request of the MS if the serving BS receives a notification response message from the target BS, in which the notification response message includes information related to services available for the MS and the response message includes information related to the services available for the MS included in the notification response message and the time interval; and
a target BS for transmitting the notification response message to the serving BS.

30. The handover system as claimed in claim 29, wherein the target BS allocates contention-free resources in order to allow the MS to perform the part of the handover process during the time interval after the target BS is notified that the MS will perform the part of the handover process prior to the handover.

31. The handover system as claimed in claim 30, wherein the MS performs the part of the handover process during the time interval by using the allocated contention-free resources after the MS has received the response message from the serving BS.

32. A handover system capable of minimizing a service delay in a broadband wireless access communication system, the handover system comprising:
a mobile station (MS) for transmitting a request to a serving BS by adding information related to a number of neighbor BSs selectable for a target BS to the request in order to perform a part of handover process prior to the handover to a target BS, if the MS determines that the handover from the serving BS to the target BS, which is selected from the neighbor BSs, is necessary;
a serving BS for transmitting a notification message to the number of neighbor BSs as the serving BS receives the request, in which the notification message notifies that the MS will perform the part of the handover process prior to the handover and includes information related to a time interval during which the part of the handover processes is performed, selecting a neighbor BS from the number of neighbor BSs in order to allow the MS to perform the part of the handover process in relation to the selected neighbor BS if the serving BS receives a notification response message from the number of neighbor BSs, and transmitting a response message in response to the request of the MS, said response message includes information related to the time interval and the selected neighbor BS; and
a number of neighbor BSs transmitting the notification response message to the serving BS, said notification response message includes information related to services available for the MS.

33. The handover system as claimed in claim 32, wherein the serving BS selects the neighbor BS capable of providing the MS with a maximum quality of service (QoS) from the number of neighbor BSs by taking the information related to the services available for the MS included in the response message transmitted from the number of neighbor BSs into consideration in order to allow the MS to perform the part of the handover processes in relation to the selected neighbor BS.

34. The handover system as claimed in claim 33, wherein the serving message transmits the response message based on the information related to the services available for the MS included in the notification response message of the selected neighbor BS.

35. The handover system as claimed in claim 34, wherein the MS performs the part of the handover process in relation to the selected neighbor BS during the time interval when the MS receives the response message from the serving BS.

36. The handover system as claimed in claim 35, wherein the selected neighbor BS allocates contention-free resources in order to allow the MS to perform the part of the handover process during the time interval after the selected neighbor BS is notified that the MS will perform the part of the handover process prior to the handover.

37. The handover system as claimed in claim 36, wherein the MS performs the part of the handover process during the time interval by using the allocated contention-free resources after the MS has received the response message from the serving BS.

38. A method of minimizing service delay for a handover process with a mobile station (MS) and a target base station (BS) in a broadband wireless access communication system including the MS, a serving BS providing services to the MS, and the target BS, the MS hands over from the serving BS to the target BS, the method comprising the steps of:
transmitting from the MS to the serving BS a message including a field representing information related to an association operation required for the handover process; and
transmitting from the serving BS to the MS a message including a response field for the association operation information and a field representing an association duration.

39. The method as claimed in claim 38, wherein the field for the association operation represents a non-contention ranging will be performed between the MS and the target BS.

40. The method as claimed in claim 38, wherein the association duration is corresponding to a scan interval for the association operation.

41. The method as claimed in claim 38, further comprising the steps of:
transmitting from the serving BS to the target BS a notification message, which notifies that the association operation is necessary for the MS with the target BS; and
transmitting from the target BS to the serving BS a notification response message including information related to services available for MS.

42. The method as claimed in claim 41, further comprising a steps of allocating by the target BS a non-contention based ranging opportunity for the MS.

43. A method of minimizing service delay for a handover process with a mobile station (MS) and a target base station (BS) in a broadband wireless access communication system including the MS, a serving BS providing services to the MS, and the target BS, the MS hands over from the serving BS to the target BS, the method comprising the steps of:
transmitting to the serving BS a message including a field representing information related to an association operation required for the handover process; and
receiving from the serving BS a message including a response field for the association operation information and a field representing an association duration.

44. The method as claimed in claim 43, wherein the field for the association operation represents a non-contention ranging will be performed between the MS and the target BS.

45. The method as claimed in claim 43, wherein the association duration is corresponding to a scan interval for the association operation.

46. A method of minimizing service delay for a handover process with a mobile station (MS) and a target base station (BS) in a broadband wireless access communication system including the MS, a serving BS providing services to the MS, and the target BS, the MS hands over from the serving BS to the target BS, the method comprising the steps of:
receiving from the a message including a field representing information related to an association operation required for the handover process; and
transmitting to the MS a message including a response field for the association operation information and a field representing an association duration.

47. The method as claimed in claim 46, wherein the field for the association operation represents a non-contention ranging will be performed between the MS and the target BS.

48. The method as claimed in claim 46, wherein the association duration is corresponding to a scan interval for the association operation.

49. The method as claimed in claim 46, further comprising the steps of:
transmitting to the target BS a notification message, which notifies that the association operation is necessary for the MS with the target BS; and
receiving from the target a notification response message including information related to services available for MS.
